# FASCICULE DE BREVET EUROPEEN

(11) **EP 2 439 502 B1**
(45) Date de publication et mention de la délivrance du brevet: **24.04.2013**
(21) Numéro de dépôt: 11290460.2
(22) Date de dépôt: 04.10.2011
(51) Int. Cl.: G01F 23/292, G01M 3/04, G01M 3/38

(54) **Dispositif de détection de la présence d'un fluide, tel qu'un fluide liquide, dans un espace d'un contenant et méthode utilisant un tel dispositif**
Vorrichtung zur Erfassung der Anwesenheit eines Fluids, insbesondere eines flüssigen Fluids, in einem Behälterraum, und eine solche Vorrichtung verwendendes Verfahren
Device for detecting the presence of a fluid, such as a liquid fluid, in a space of a container and method using such a device

(30) Priorité: 08.10.2010 FR 1003976
(43) Date de publication de la demande: 11.04.2012
(73) Titulaire: IFP Energies Nouvelles, 92852 Rueil Malmaison Cedex (FR)
(72) Inventeur: Flaconneche, Bruno, 94830 Cormeilles-en-Vexin (FR); Frot, Didier, 78100 Saint-Germain-en-Laye (FR); Dewimille, Bernard, 91100 Corbeil-Essonnes (FR)

(56) Documents cités:
- WO-A1-2006/038788
- JP-A- 8 170 940
- US-A- 4 882 499
- US-A- 5 015 843

## Description

La présente invention se rapporte à un dispositif de détection d'un fluide, tel qu'un fluide liquide, dans un espace d'un contenant.

Elle concerne plus particulièrement un dispositif de détection de la présence d'un fluide dans un espace délimité par deux parois de l'enveloppe de ce contenant, cette présence permettant, soit de signaler une fuite du fluide présent dans le contenant, soit de détecter l'intrusion dans cet espace d"un fluide venant de l'extérieur du contenant.

Ce contenant peut être de tous types, comme une cuve, un réservoir, une citerne de navire ou une canalisation en particulier pour des hydrocarbures sous forme liquide, vapeur ou gazeuse.

Il est déjà connu de nombreux dispositifs pour détecter des fuites d'un fluide liquide d'un contenant.

Notamment, un dispositif de visualisation d'un niveau liquide, comme un tube transparent, est largement employé mais n'est pas d'un accès facile surtout pour les réservoirs enterrés ou les canalisations souterraines.

De même, l'emploi de flotteurs pose problème dans le sens qu'il n'est pas aisé de les placer, notamment dans l'espace restreint formé entre les deux parois. De plus, dans l'éventualité où ces flotteurs sont équipés de contacteurs électriques, le risque d'accident est aggravé, en particulier lorsque le contenant renferme des matières inflammables ou explosives.

Un capteur de pression est également utilisé mais nécessite de faire le vide ou d'assurer une pression déterminée entre les parois. Ainsi, toute variation de pression dans l'espace entre les parois est relevée par le capteur puis traitée, ce qui permet de signaler une fuite. Ceci requiert cependant des mécanismes de mise sous pression ou de création de vide qui sont d'un coût très élevé et réclame une maintenance constante pour maintenir le niveau de pression souhaitée.

Il est également connu, par le document US 5 200 615, un dispositif de surveillance de fuite associé à un réservoir à double parois qui utilise la réflexion d'un rayon lumineux sur une surface réfléchissante.

Ce rayon lumineux est véhiculé par un système de fibres optiques comportant une fibre émettrice de lumière et une fibre réceptrice de lumière. Ainsi, le rayon lumineux provenant de la fibre émettrice vient se refléter sur la surface réfléchissante porté à distance de l'extrémité libre de cette fibre. Ce rayon réfléchi est capté par la fibre réceptrice pour être renvoyé vers des moyens de traitement.

La surface réfléchissante est composée d'une couche qui est un mélange d'une résine adhésive avec une poudre fluorescente, phosphorescente ou radioactive, cette résine pouvant être dissoute par contact avec le fluide à détecter. Cette surface peut aussi être constituée d'une plaque réfléchissante qui est fixée à distance des fibres par une matière de collage qui peut également être dissoute par contact avec ce fluide.

Lorsque cette surface réfléchissante est au contact d'un fluide, comme un hydrocarbure, elle se dissout ou se détache. Par cela, le rayon lumineux ne peut plus être renvoyé par la surface réfléchissante et la fibre réceptrice ne capte aucune lumière.

De ce fait, cette absence de signal lumineux est traitée par tous moyens connus en soi comme la représentation d'une fuite provenant du réservoir.

Bien que donnant satisfaction, ce dispositif présente des inconvénients non négligeables.

D'une part, ce dispositif est d'une élaboration compliquée et coûteuse avec plusieurs fibres et plusieurs matériaux, car il est nécessaire de réaliser une réflexion de la lumière sur des particules ou des éléments extérieurs à la fibre, ce qui nécessite une seconde fibre pour le retour du signal réfléchi.

D'autre part, ce dispositif n'est pas totalement fiable dans le temps du fait de l'alignement précis des fibres qu'il est nécessaire de réaliser.

De plus, il est possible que la matière réfléchissante perde de sa réflexivité au cours du temps ou que la matière de collage, suite à son vieillissement, ne puisse plus assurer sa fonction de maintien de la plaque réfléchissante et que cette dernière se sépare de l'ensemble du dispositif.

Par cela, le dispositif de détection reçoit comme information une absence de signal lumineux. Cette absence est traitée comme la représentation d'une fuite provenant du réservoir alors que cette fuite n'a pas eu lieu.

Ceci déclenche alors des opérations de sécurité, comme une vidange en urgence de ce contenant, des fermetures de vannes, une mise en route de pompes..., qui peuvent avoir des conséquences graves voire néfastes sur le contenant lui même et/ou son environnement.

En outre, et par principe, le fonctionnement du dispositif de détection est irréversible puisque une partie est dissoute par le fluide et devrait être remplacée en effectuant des raccordements délicats sur les fibres optiques si on souhaite remettre le détecteur en fonctionnement.

Il est également connu par le document US 5 015 843 un dispositif de capteurs chimiques à fibre optique pour détecter des espèces chimiques dans une solution. Ce dispositif utilise la réflexion d'un rayon lumineux sur une surface réfléchissante mobile sous la pression d'un élément sensible qui augmente de volume en présence d'espèces chimiques.

Ce dispositif présente les mêmes inconvénients que celui mentionné précédemment du fait de l'utilisation d'une surface réfléchissante.

Dans le document JP 8 170940, il est décrit un détecteur d'humidité qui utilise un faisceau lumineux véhiculé par un système de fibre optique émettrice/réceptrice. Une matière pouvant gonfler sous l'effet de l'absorption d'eau est placé au voisinage de ce faisceau. Dés que cette matière atteint un certain volume, elle coupe le faisceau lumineux et signale par cela qu'une valeur seuil d'humidité a été atteinte.

Ce dispositif a pour inconvénient de pouvoir être facilement perturbé par des éléments extérieurs, comme par un obstacle solide mobile, tel que des débris, qui peut couper le faisceau lumineux alors que la matière n'a pas atteint le volume signalant la valeur seuil d'humidité.

De ce fait, des actions, comme des alarmes, peuvent être déclenchées alors qu'elles n'ont pas lieu d'être.

La présente invention se propose de remédier aux inconvénients précités grâce à une méthode de détection de fuite de conception simple et fiable avec un temps de réaction très rapide.

A cet effet la présente invention concerne une méthode de détection de la présence d'un fluide dans un espace d'un contenant, avec une fibre optique dans laquelle circule un rayon lumineux et portant un élément sensible au fluide, caractérisé en ce qu'elle consiste :
- à placer l'élément sensible, dont les caractéristiques de forme varient en fonction de l'absorption du fluide, à distance de la face de l'extrémité de la fibre et en regard de ladite face,
- à mettre cet élément dans l'espace pour absorber le fluide contenu dans cet espace,
- à évaluer la modification de l'indice de réfraction du milieu en contact avec ladite face lorsque l'élément sensible vient au contact de cette face sous l'effet de l'absorption du fluide,
- à déterminer la présence de fluide dans cet espace dans le cas où l'indice de réfraction mesuré est différent de l'indice de réfraction nominal.

La méthode peut consister à loger une pastille sensible au fluide sur la face ouverte en direction de l'espace d'un boîtier, et en regard de l'extrémité libre de la fibre.

La méthode peut consister à utiliser un élément sensible au fluide en une matière à base de polymère ou d'élastomère.

La méthode peut concerner la détection de la présence d'un fluide dans un espace d'un contenant délimité par une double paroi.

La méthode peut concerner la détection de la présence d'un carburant.

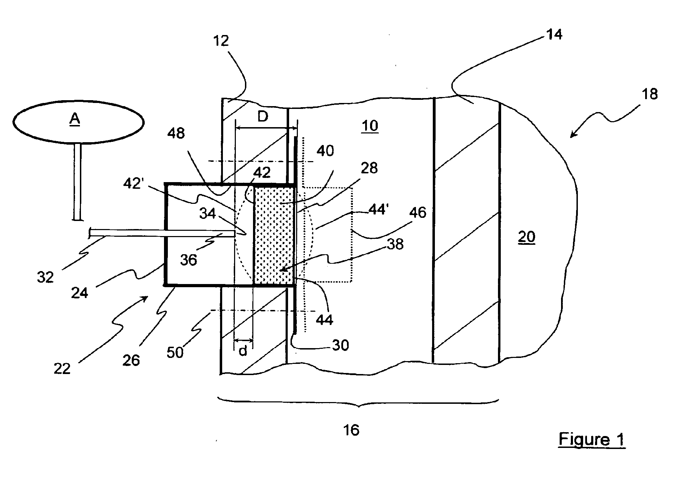

Les autres caractéristiques et avantages de l'invention vont apparaître maintenant à la lecture de la description qui va suivre, donnée à titre uniquement illustratif et non limitatif, et à laquelle est annexée la seule figure 1 qui est un schéma montrant un dispositif de détection selon l'invention.

Sur cette figure 1, le dispositif illustré à titre d'exemple est utilisé pour détecter la présence d'un fluide dans un espace 10 délimité par deux parois contigües, une paroi extérieure 12 et une paroi intérieure 14 formant une enveloppe 16 d'un contenant 18.

Dans le cadre de l'invention décrite ci-après le contenant dans lequel est placé ce fluide peut être une cuve, une canalisation, un réservoir, une citerne de navire ou tout autre volume renfermant un fluide.

Le fluide à détecter est avantageusement sous forme liquide mais une détection d'un fluide sous forme vapeur ou gazeuse est également possible.

Dans la suite de la description, le contenant considéré est une cuve fermée à double paroi renfermant un fluide, par exemple un carburant ou un liquide d'hydrocarbure, dans son volume interne 20.

Ce dispositif comprend un boîtier 22 avec un fond avantageusement plat 24, une paroi périphérique 26, de préférence cylindrique, avec une face ouverte 28 sur le côté en regard de l'espace 10. La face ouverte se poursuit en direction radialement extérieure à partir de la paroi périphérique 26 par une collerette d'appui et de fixation 30.

Le fond 24 de ce boîtier est traversé, sensiblement de manière centrale et axiale, par une portion de fibre optique 32 d'une façon telle que la face 34 de l'extrémité libre 36 de cette fibre dans lequel circule le rayon faisceau lumineux se trouve à une distance D de la face ouverte.

Cette fibre optique fait partie d'un ensemble d'analyse A, comme mieux décrit dans la demande FR 2 649 194 du demandeur.

Comme mieux illustré sur la figure, le dispositif de détection comprend un élément sensible au fluide 38 disposé en regard de la face 34 de la fibre et qui absorbe le fluide lorsque cet élément est au contact de celui-ci.

Pour cela, la face ouverte du boîtier est obturée par une pastille 40 comportant une matière qui a pour avantage de modifier ses caractéristiques de forme en fonction de l'absorption du fluide.

Cette modification peut aller de l'augmentation de son volume et/ou de l'agrandissement d'une au moins de ses dimensions.

Ainsi, dans l'exemple de la figure 1, la pastille 40 modifie ses caractéristiques structurelles de forme, et par conséquent ses caractéristiques dimensionnelles, en fonction de l'absorption du fluide. Plus particulièrement, elle a pour particularité d'augmenter son volume lorsqu'elle est absorbe le fluide par contact avec celui-ci.

Si le fluide est un carburant hydrocarbure, cette matière est, de préférence, un polymère ou élastomère, comme un silicone, présentant un fort pouvoir d'absorption de l'hydrocarbure.

Comme illustré sur la figure 1, la pastille 40 a une section diamétrale qui correspond sensiblement à la section diamétrale interne du boîtier au niveau de sa face ouverte en étant fixée à celui-ci par tous moyens, comme un collage ou un montage à force, tel qu'un sertissage.

Bien entendu, d'autres formes de la pastille et d'autres systèmes de fixation peuvent être utilisés, notamment cette pastille peut être maintenue mécaniquement entre deux collerettes portées par le boîtier.

Cette pastille comporte deux faces 42, 44 sensiblement planes et parallèles entre elles dont l'une 42 est située en regard de l'extrémité libre de le fibre et à une distance d de l'extrémité libre 34 de la fibre, distance d qui est plus petite que le distance D, et l'autre 44 est sensiblement confondue avec le plan passant par la collerette 30 de manière à être en relation avec l'espace 10.

Ainsi, généralement de l'air, avec un indice de réfraction de 1, est présent dans l'interstice entre la face 42 de la pastille et face 34 de l'extrémité 36 de la fibre. Par cela, il est possible de surveiller de l'intensité du rayon lumineux qui parcourt la fibre. Ceci permet d'indiquer un fonctionnement adéquat de l'ensemble.

Il est également possible de surveiller la température dans l'espace 10 car toute élévation de température du fluide présent dans cet espace (qui contient habituellement de l'air) entraine une variation d'indice de réfraction de cet air, variation que l'on peut mesurer au niveau de la fibre 32.

De manière avantageuse, la face ouverte 28 du boîtier 22 est recouverte par un couvercle de protection 46 pour interdire tout intrusion de matière solide dans le boîtier afin de ne pas dégrader mécaniquement la pastille 40 ou le reste du dispositif.

Ce couvercle est perméable au fluide et comporte préférentiellement des parois poreuses ou une grille ou une plaque perforée.

Le dispositif ainsi décrit est monté à étanchéité au travers d'une ouverture 48 située sur la paroi extérieure 12 de l'enveloppe d'une façon telle que la pastille 40 portée par la face ouverte du boîtier se situe en regard de l'espace 10.

Ce dispositif est ensuite fixé sur cette paroi extérieure par tous moyens connus, comme des vis 50, qui permettent d'assurer cette fixation grâce la collerette 30.

Lors du fonctionnement de ce dispositif, un rayon lumineux circule dans la fibre optique jusqu'à l'extrémité libre 34 où il permet de déterminer, en association avec l'ensemble d'analyse A, l'indice de réfraction du fluide dans lequel est plongée la face 34 de la fibre.

En cas d'absence de fuite dans l'espace 10, la pastille ne subit aucune modification de forme et notamment de sa face 42.

L'intensité du rayon lumineux réfléchi à l'extrémité de la fibre est donc constante et l'ensemble d'analyse vers lequel est dirigé ce rayon lumineux réfléchi en déduit qu'aucun fluide n'est présent dans l'espace 10.

A l'opposé, en cas d'introduction de fluide dans l'espace 10, en particulier lors d'une fuite de ce fluide au travers de la paroi interne 14 de l'enveloppe, celui-ci vient au contact de la pastille 40 en traversant le couvercle poreux 46.

Ce contact a pour conséquence d'accroitre le volume initial de la pastille par absorption de ce fluide ou par réaction chimique avec ce fluide. Cet accroissement de volume ne peut se répercuter que sur les faces 42, 44 de cette pastille qui arrivent à une forme bombée, comme illustrée sur la figure par les références 42' et 44'.

Dans cette configuration, la face bombée 42', et plus particulièrement le sommet de celle-ci, vient au contact de la face 34 de l'extrémité libre 36 de la fibre en l'obturant.

De ce fait, la réflexion du rayon lumineux sur la face 34 au bout de cette fibre est modifiée suite à la modification de l'indice de réfraction du milieu en contact avec l'extrémité de la fibre, et l'ensemble d'analyse reçoit un signal sur une variation de l'intensité du rayon lumineux réfléchi.

L'ensemble d'analyse détermine ainsi qu'il y a une présence de fluide dans l'espace 10 au niveau du dispositif de détection et par conséquent que la cuve 18 est sujette à une fuite.

En fonction de cette détermination de fuite, l'ensemble d'analyse commande directement ou indirectement tous moyens connus pour agir en conséquence, comme un actionnement d'alarme, une mise en actionnement de dispositif de sécurité, ...

Il est à noter que le dispositif est rendu à nouveau opérationnel d'une manière aisée et rapide, car la pastille gonflée par le fluide retrouvera sa forme initiale après une désorption partielle ou quasiment totale de ce fluide. De ce fait, le dispositif de détection sera alors de nouveau prêt à reprendre sa fonction sans changement de tout ou partie de ses éléments.

Egalement, il peut être envisagé d'adapter facilement le dispositif de détection à des évolutions de son environnement ou à des changements de situation.

Notamment, il peut être possible de changer la pastille sans intervenir sur la fibre optique. Ceci est particulièrement avantageux dans le cas où ce changement de pastille est rendu nécessaire pour répondre à des instructions ou règlements de sécurité ou de qualité. De même, si le fluide dans le contenant a changé, cela permet d'adapter la matière de la pastille à ce nouveau fluide, ce qui peut être le cas pour les cuves de carburant (essence, gazole, alcool, biodiesel...).

Il peut être prévu qu'une succession de dispositifs de détection soit placée le long de l'espace 10, comme cela est mieux décrit dans la demande FR 2 899 971 du demandeur, de manière à pouvoir localiser l'origine de la fuite et sa propagation ou si la structure présente plusieurs volumes séparés qui devraient être tous équipés d'un détecteur.

Plus précisément, il est prévu une seule fibre optique qui comporte le long de son corps une pluralité de coupleurs reliés chacun à un tronçon de fibre optique semblable à la fibre 32 décrite ci-dessus avec l'association de l'élément sensible 38.

Bien entendu et cela sans sortir du cadre de l'invention, le dispositif décrit ci-dessus peuvent être utilisé pour détecter la présence d'un fluide dans un espace d'un réceptacle avec une seule paroi. A titre d'exemple, ce réceptacle peut être un récipient dans lequel le fluide est recueilli lors d'une fuite de fluide provenant d'un réservoir, d'une cuve, ...

## Revendications

1. Méthode de détection de la présence d'un fluide dans un espace (10) d'un contenant (18), avec une fibre optique (32) dans laquelle circule un rayon lumineux et portant un élément sensible au fluide (38), **caractérisé en ce qu'**elle consiste :
- à placer l'élément sensible, dont les caractéristiques de forme varient en fonction de l'absorption du fluide, à distance (d) de la face (34) de l'extrémité de la fibre et en regard de ladite face,
- à mettre cet élément dans l'espace (10) pour absorber le fluide contenu dans cet espace,
- à évaluer la modification de l'indice de réfraction du milieu en contact avec ladite face lorsque l'élément sensible vient au contact de cette face sous l'effet de l'absorption du fluide,
- à déterminer la présence de fluide dans cet espace dans le cas où l'indice de réfraction mesuré est différent de l'indice de réfraction nominal.

2. Méthode de détection selon la revendication 1, **caractérisée, en ce qu'**elle consiste à fournir un boîtier (22) avec une face ouverte (28) en direction de l'espace (10) et à loger dans le boîtier (22) ladite face (34) de l'extrémité de la fibre optique (32) ainsi que ledit élément sensible au fluide (38) de telle sorte que ledit élément sensible au fluide (38) soit placé sur la face ouverte (28) du boîtier (22), ledit élément sensible au fluide (38) étant en forme de pastille (40).

3. Méthode de détection selon la revendication 1 ou 2, **caractérisée en ce qu'**elle consiste à utiliser un élément sensible au fluide (38) en une matière à base de polymère ou d'élastomère.

4. Méthode de détection selon la revendication 1, **caractérisée en ce que** l'espace (10) du contenant est délimité par une double paroi (12, 14).

5. Méthode de détection selon la revendication 1, **caractérisée en ce que** le fluide est un carburant.

## Claims

1. A method of detecting the presence of a fluid in a space (10) of a container (18), with an optical fiber (32) in which a light ray circulates and carrying a fluid sensitive element (38), **characterized in that** it consists in:
- placing the sensitive element, whose shape characteristics vary as a function of the fluid absorption, at a distance (d) from face (34) of the end of the fiber and opposite said face,
- setting this element in space (10) so as to absorb the fluid contained in this space,
- assessing the modification of the refractive index of the medium in contact with said face when the sensitive element comes into contact with this face under the effect of fluid absorption,
- determining the presence of fluid in this space in case the measured refractive index is different from the nominal refractive index.

2. A detection method as claimed in claim 1, **characterized in that** it consists in providing a housing (22) with an open face (28) in the direction of space (10) and in setting in housing (22) said face (34) of the end of optical fiber (32), as well as said fluid sensitive element (38), so that said fluid sensitive element (38) is placed on open face (28) of housing (22), said fluid sensitive element (38) having the shape of a pellet (40).

3. A detection method as claimed in claim 1 or 2, **characterized in that** it consists in using a fluid sensitive element (38) made from a polymer or elastomer based material.

4. A detection method as claimed in claim 1, **characterized in that** space (10) of the container is delimited by a double wall (12, 14).

5. A detection method as claimed in claim 1, **characterized in that** the fluid is a fuel.

## Patentansprüche

1. Methode zur Erfassung des Vorhandenseins eines Fluids in einem Raum (10) eines Behälters (18) mit einer optischen Faser (32), in der ein Lichtstrahl zirkuliert und die ein für das Fluid (38) sensibles Element trägt, **dadurch gekennzeichnet, dass** sie darin besteht:
- das sensible Element, dessen Formeigenschaften in Abhängigkeit von der Absorption des Fluids variieren, in einem Abstand (d) zur Seite (34) des Endes der Faser und gegenüber dieser Seite anzuordnen,
- dieses Element in den Raum (10) zu stellen, um das in diesem Raum enthaltene Fluid zu absorbieren,
- die Veränderung des Brechungsindex des mit der Seite in Kontakt befindlichen Mediums zu bewerten, wenn das sensible Element mit dieser Seite unter der Wirkung der Absorption des Fluids in Kontakt kommt,
- das Vorhandensein eines Fluids in diesem Raum zu bestimmen, falls der gemessene Brechungsindex zum Nominalbrechungsindex unterschiedlich ist.

2. Erfassungsmethode nach Anspruch 1, **dadurch gekennzeichnet, dass** es darin besteht, ein Gehäuse (22) mit einer offenen Seite (28) in Richtung des Raums (10) zu liefern und in dem Gehäuse (22) die Seite (34) des Endes der optischen Faser (32) sowie das für das Fluid sensible Element (38) anzuordnen, so dass das für das Fluid sensible Element (38) auf der offenen Seite (28) des Gehäuses (22) angeordnet ist, wobei das für das Fluid sensible Element (38) in Form einer Tablette (40) vorhanden ist.

3. Erfassungsmethode nach Anspruch 1 oder 2, **dadurch gekennzeichnet, dass** sie darin besteht, ein für das Fluid sensibles Element (38) aus einem Material auf Basis von Polymer oder Elastomer zu verwenden.

4. Erfassungsmethode nach Anspruch 1, **dadurch gekennzeichnet, dass** der Raum (10) des Behälters durch eine doppelte Wand (12, 14) begrenzt ist.

5. Erfassungsmethode nach Anspruch 1, **dadurch gekennzeichnet, dass** das Fluid ein Treibstoff ist.
